# EUROPEAN PATENT APPLICATION

(11) **EP 2 750 105 A1**
(43) Date of publication of application: **02.07.2014**
(21) Application number: 12306719.1
(22) Date of filing: 31.12.2012
(51) Int. Cl.: G06T 9/00

(54) **Streaming a simulated three-dimensional modeled object from a server to a remote client**

(71) Applicant: Dassault Systèmes, 78140 Velizy Villacoublay (FR)
(72) Inventor: Tuffreau, Jean Julien, 92350 Le Plessis Robinson (FR); Boulkenafed Malika, 92400 Courbevoie (FR); Sebah, Pascal, 75007 Paris (FR)
(74) Representative: Bandpay & Greuter

(57) **Abstract**

It is proposed a computer-implemented method for streaming a simulated three-dimensional modeled object from a server to a remote client, comprising the steps of:
a) receiving (S10) on a server an interaction performed by a user on a remote client;
b) performing (S20) on the server the steps of:
- simulating (S210) a three-dimensional modeled object based on the interaction;
- converting (S220) the result of the simulation into at least one two-dimensional image;
- compressing (S240) the said at least one two-dimensional image; and
- sending (S260) to the remote client the compressed at least one two-dimensional image.

## Description

### FIELD OF THE INVENTION

The invention relates to the field of computer programs and systems, and more specifically to a method, system and program for streaming a simulated three-dimensional modeled object from a server to a remote client.

### BACKGROUND

A number of systems and programs are offered on the market for the design, the engineering and the manufacturing of objects. CAD is an acronym for Computer-Aided Design, e.g. it relates to software solutions for designing an object. CAE is an acronym for Computer-Aided Engineering, e.g. it relates to software solutions for simulating the physical behavior of a future product. CAM is an acronym for Computer-Aided Manufacturing, e.g. it relates to software solutions for defining manufacturing processes and operations. In such computer-aided design systems, the graphical user interface plays an important role as regards the efficiency of the technique. These techniques may be embedded within Product Lifecycle Management (PLM) systems. PLM refers to a business strategy that helps companies to share product data, apply common processes, and leverage corporate knowledge for the development of products from conception to the end of their life, across the concept of extended enterprise.

The PLM solutions provided by Dassault Systemes (under the trademarks CATIA, ENOVIA and DELMIA) provide an Engineering Hub, which organizes product engineering knowledge, a Manufacturing Hub, which manages manufacturing engineering knowledge, and an Enterprise Hub which enables enterprise integrations and connections into both the Engineering and Manufacturing Hubs. All together the system delivers an open object model linking products, processes, resources to enable dynamic, knowledge-based product creation and decision support that drives optimized product definition, manufacturing preparation, production and service.

The problem of providing interactive and remote access to simulated/animated 3D modeled objects is of significant importance in the field of computer graphics. There are several applications for animated geometry such as computer games and virtual worlds. Due to the unceasing increased need in computational power and memory several, solutions exist to run such applications on powerful servers or a cloud and to stream back to the user the resulting experience. There are today two major approaches to stream such experiences: pixel streaming and geometry streaming.

In pixel streaming the 3D experience runs on the remote server as well as the rendering of each frame of the simulation. Then, the rendered frames are streamed using video compression techniques to the connected client (the user's device) through the network. The pixel technique addresses mainly video game like applications and relies on strong agreements with network providers to guarantee bandwidth availability: indeed, pixel streaming has a high bandwidth consumption that can hardly be adjusted. In addition, only images are displayed on the client receiving the streaming. Thus, the user cannot interact with the simulation or modify the viewpoint on the object with server's interventions. Furthermore, if the stream is interrupted, the client is unable to display anything but the last received image. Moreover, pixel streaming raises the problem of server's scalability: indeed, the number of clients a single server can handle is limited because of the computational cost of 3D rendering on the server is quite high.

In Geometric streaming, the 3D experience run on the remote server and geometries of modeled objects are streamed to the connected client and remotely rendered. Geometric streaming is typically appropriate for static meshes. However, when the mesh is animated by real-time simulation streaming pure geometry becomes inappropriate in terms of meeting real-time delivery constraints. Indeed, there is no efficient compression scheme that can be used to describe complex or random deformations of three-dimensional modeled objects. In addition, the client receiving the streaming has to hold enough computing resources for rendering of the simulation, which is not the case with devices such as tablet computer, smartphone, and so on.

Within this context, there is still a need for an improved streaming from a server to a remote client of a simulated three-dimensional modeled object.

### SUMMARY OF THE INVENTION

According to one aspect, the invention provides a computer-implemented method for streaming a simulated three-dimensional modeled object from a server to a remote client. The method comprises the steps of:
a) receiving on a server an interaction performed by a user on a remote client;
b) performing on the server the steps of:
   - simulating a three-dimensional modeled object based on the interaction;
   - converting the result of the simulation into at least one two-dimensional image;
   - compressing the said at least one two-dimensional image; and
   - sending to the remote client the compressed at least one two-dimensional image.

The method may comprise one or more of the following:
- the step of compressing the said at least one two-dimensional image comprises computing a difference between the current two-dimensional image and a previous two-dimensional image, compressing the computed difference;
- the step of compressing is repeatedly performed with a compression without computing the difference;
- the current and previous two-dimensional images are two successive two-dimensional images obtained from the result of the simulation;
- a step of emulating a cumulated error due to the computing of the difference at the compressing step;
- wherein the said at least one two-dimensional image is a geometry image;
- the interaction performed at the receiving step a) is performed on a three-dimensional modeled object displayed on the remote client;
- the step of b) performing is carried out in real time by the server;
- further comprising c) performing on the remote client the steps of receiving the compressed at least one two-dimensional image sent by the server, decompressing the compressed at least one two-dimensional image, converting the at least one two-dimensional image into a three-dimensional modeled object, and displaying the converted two-dimensional object;
- the step of decompressing the compressed at least one two-dimensional image comprises determining that the compressed at least one two-dimensional image received by the remote client has been computed from the difference between the current two-dimensional image and a previous two-dimensional image, and wherein the step of converting the at least one two-dimensional image into a three-dimensional modeled object comprises computing a sum between a current decompressed at least one two-dimensional image and a previous decompressed two-dimensional image, converting the computed sum into a three-dimensional modeled object.

The invention further proposes a computer program having computer-executable program code instructions stored therein, the computer-executable program code instructions comprising program code instructions for performing the method according to the invention.

The invention further proposes a computer readable storage medium having recorded thereon the above computer program.

The invention further proposes a system for streaming a simulated three-dimensional modeled object from a server to a remote client, the system comprising:
i) a server comprising a module for performing the steps a) and b) of the above method;
ii) a client comprising:
   - a graphical user interface for displaying a three-dimensional modeled object;
   - a haptic device for generating an interaction performed by a user on the graphical user interface;
   - a module for performing the step c) of the above method.

The system may further comprise iii) a communication network connecting the server to the client.

### BRIEF DESCRIPTION OF THE DRAWINGS

Embodiments of the invention will now be described, by way of non-limiting example, and in reference to the accompanying drawings, where:
- FIG. 1 shows a flowchart of an example of the method according to the invention;
- FIG. 2 shows a flowchart depicting an example of the step S30 of FIG. 1;
- FIGS. 3 and 4 show an example of the conversion of a 3D modeled object into a geometry image;
- FIG. 5 shows an example of the architecture of a system carrying out the method according to the invention;
- FIG. 6 shows an example of the streaming of packets comprising compressed 2D images;
- FIG. 7 shows an example of a graphical user interface;
- FIG. 8 shows an example of a computer system, for instance the client or the server.

### DETAILED DESCRIPTION OF THE INVENTION

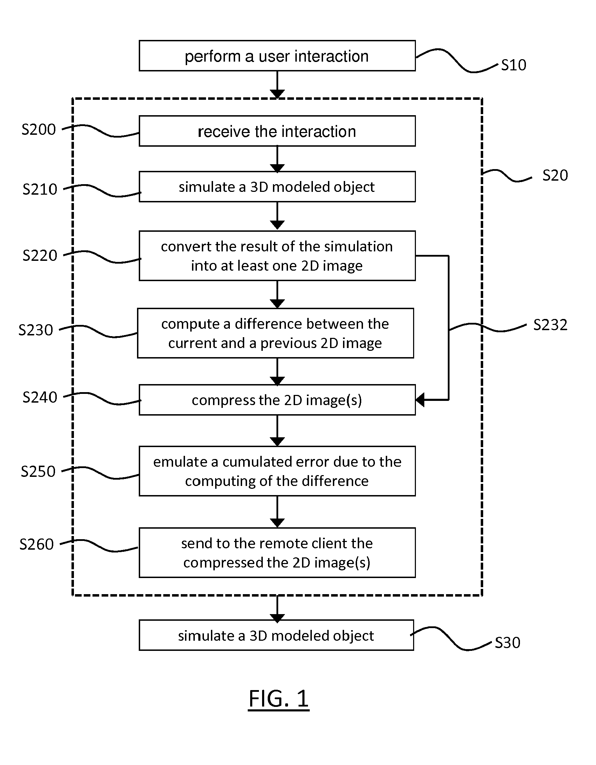

With reference to the flowchart of FIG. 1, it is proposed a computer-implemented method for streaming a simulated three-dimensional (3D) modeled object from a server to a remote client. The term streaming refers to the delivery of a medium, here a simulated 3D modeled object. The terms server and client refers to the client-server model. The client is remote, which means that the server and the client are not the same device. The method comprises a step of receiving on the server side an interaction performed by a user on the client. The method further comprises performing on the server several step. The server performs a step of simulating a 3D modeled object based on the interaction. For instance, the 3D modeled object simulated may be a 3D modeled object represented on the client and on which the user has performed the interaction. The server also performs the conversion of the result of the simulation into at least one two-dimensional (2D) image. The server further performs the compression of the one or more 2D image, and then sends to the remote client the compressed one or more 2D image.

Such a method improves remote interactions with a 3D modeled object while decreasing consumption of client's computer resources because the simulation on the server of the 3D modeled object is triggered as a result of a remote interaction, which is related to this 3D modeled object, and the compressed result of the simulation is transferred to the client that performs a simple rendering of the result. In addition, the client can interact directly on the 3D model object because the result of the simulation, and not an image of the object representative of the simulation, is sent from the server to the client; that is, the client is aware of any 3D information about the modeled object. A further advantage is that, in the event the data stream is interrupted for any reason (network latency, server breakdown...), the client has a knowledge of the 3D object (latest state sent by the server), and it is still able to perform some operations, *e.g.* such as navigating through the scene wherein the 3D modeled object is located. In addition, the scalability of the server is improved because no rendering is performed on the server side. In particular, the present invention is not viewpoint dependent so that the same data can be computed and sent to several clients. Each will display the scene has seen from its current viewpoint. Furthermore, the present invention is suitable for 3D modeled objects described as polygonal meshes with complex deformations; for instance; it is suitable for physical simulation of a deformable object when each point of the object is moved by the simulation and its movement has no trivial relation with the movement of neighboring points.

The method is computer-implemented. This means that the steps (or substantially all the steps) of the method are executed by at least one computer. In examples, the triggering of at least some of the steps of the method may be performed through user-computer interaction. The level of user-computer interaction required may depend on the level of automatism foreseen and put in balance with the need to implement the user's wishes. In examples, this level may be user-defined and/or pre-defined.

A typical example of computer-implementation of the method is to perform the method with a computerized system comprising a graphical user interface (GUI) suitable for this purpose. The GUI is coupled with a memory and a processor. The memory, which stores a database, is merely any hardware suitable for such storage.

By "database", it is meant any collection of data (i.e. information) organized for search and retrieval. When stored on a memory, the database allows a rapid search and retrieval by a computer. Databases are indeed structured to facilitate storage, retrieval, modification, and deletion of data in conjunction with various data-processing operations. The database may consist of a file or set of files that can be broken down into records, each of which consists of one or more fields. Fields are the basic units of data storage. Users may retrieve data primarily through queries. Using keywords and sorting commands, users can rapidly search, rearrange, group, and select the field in many records to retrieve or create reports on particular aggregates of data according to the rules of the database management system being used.

In the case of the method, information required for performing the simulation may be stored in a database.

The method generally manipulates modeled objects. A modeled object is any object defined by data stored in the database. By extension, the expression "modeled object" designates the data itself. According to the type of the system, the modeled objects may be defined by different kinds of data. The system may indeed be any combination of a CAD system, a CAE system, a CAM system, and/or a PLM system. In those different systems, modeled objects are defined by corresponding data. One may accordingly speak of CAD object, PLM object, CAE object, CAM object, CAD data, PLM data, CAM data, CAE data. However, these systems are not exclusive one of the other, as a modeled object may be defined by data corresponding to any combination of these systems. A system may thus well be both a CAD and PLM system, as will be apparent from the definitions of such systems provided below.

By CAD system, it is meant any system suitable at least for designing a modeled object on the basis of a graphical representation of the modeled object, such as CATIA. In this case, the data defining a modeled object comprise data allowing the representation of the modeled object. A CAD system may for example provide a representation of CAD modeled objects using edges or lines, in certain cases with faces or surfaces. Lines, edges, or surfaces may be represented in various manners, e.g. non-uniform rational B-splines (NURBS). Specifically, a CAD file contains specifications, from which geometry may be generated, which in turn allows for a representation to be generated. Specifications of a modeled object may be stored in a single CAD file or multiple ones. The typical size of a file representing a modeled object in a CAD system is in the range of one Megabyte per part. And a modeled object may typically be an assembly of thousands of parts.

In the context of CAD, a modeled object may typically be a 3D modeled object, e.g. representing a product such as a part or an assembly of parts, or possibly an assembly of products. By "3D modeled object", it is meant any object which is modeled by data allowing its 3D representation. A 3D representation allows the viewing of the part from all angles. For example, a 3D modeled object, when 3D represented, may be handled and turned around any of its axes, or around any axis in the screen on which the representation is displayed. This notably excludes 2D icons, which are not 3D modeled. The display of a 3D representation facilitates design (i.e. increases the speed at which designers statistically accomplish their task). This speeds up the manufacturing process in the industry, as the design of the products is part of the manufacturing process.

A CAD system may be history-based. In this case, a modeled object is further defined by data comprising a history of geometrical features. A modeled object may indeed be designed by a physical person (i.e. the designer/user) using standard modeling features (e.g. extrude, revolute, cut, and/or round etc.) and/or standard surfacing features (e.g. sweep, blend, loft, fill, deform, smoothing and/or etc.). Many CAD systems supporting such modeling functions are history-based system. This means that the creation history of design features is typically saved through an acyclic data flow linking the said geometrical features together through input and output links. The history based modeling paradigm is well known since the beginning of the 80's. A modeled object is described by two persistent data representations: history and B-rep (i.e. boundary representation). The B-rep is the result of the computations defined in the history. The shape of the part displayed on the screen of the computer when the modeled object is represented is (a tessellation of) the B-rep. The history of the part is the design intent. Basically, the history gathers the information on the operations which the modeled object has undergone. The B-rep may be saved together with the history, to make it easier to display complex parts. The history may be saved together with the B-rep in order to allow design changes of the part according to the design intent.

By PLM system, it is meant any system suitable for the management of a modeled object representing a physical manufactured product. In a PLM system, a modeled object is thus defined by data suitable for the manufacturing of a physical object. These may typically be dimension values and/or tolerance values. For a correct manufacturing of an object, it is indeed better to have such values.

By CAE system, it is meant any system suitable for the analysis of the physical behaviour of a modeled object. In a CAE system, a modeled object is thus defined by data suitable for the analysis of such bahavior. This may be typically a set of behavioring features. For instance, a modeled object corresponding to a door may be defined by data indicating that the door rotates around an axis.

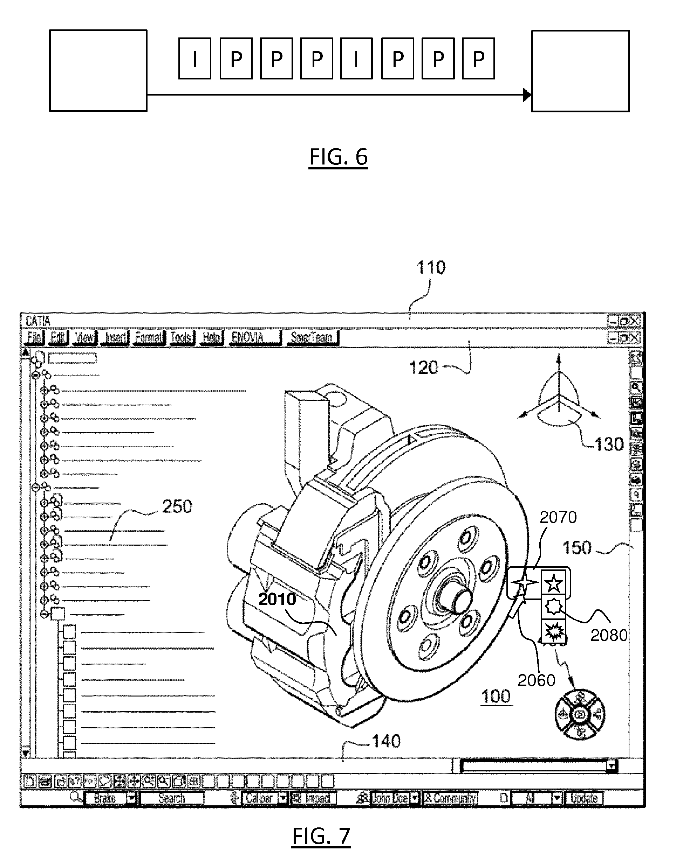

FIG. 7 shows an example of the GUI displayed by the client to the user. The client may be a CAD system.

The GUI 100 may be a typical CAD-like interface, having standard menu bars 110, 120, as well as bottom and side toolbars 140, 150. Such menu- and toolbars contain a set of user-selectable icons, each icon being associated with one or more operations or functions, as known in the art. Some of these icons are associated with software tools, adapted for editing and/or working on the 3D modeled object 2010 displayed in the GUI 100. The software tools may be grouped into workbenches. Each workbench comprises a subset of software tools. In particular, one of the workbenches is an edition workbench, suitable for editing geometrical features of the modeled product 2010. In operation, a designer may for example pre-select a part of the object 2010 and then initiate an operation (e.g. change the dimension, color, etc.) or edit geometrical constraints by selecting an appropriate icon. For example, typical CAD operations are the modeling of the punching or the folding of the 3D modeled object displayed on the screen.

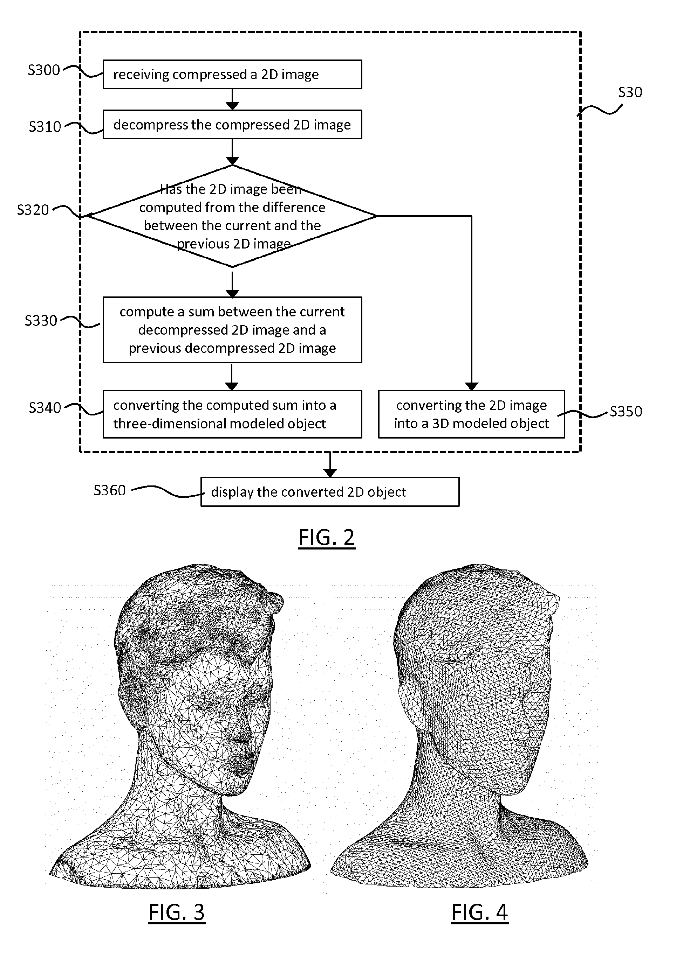

The GUI may for example display data 250 related to the displayed product 2010. In the example of FIG. 2, the data 250, displayed as a "feature tree", and their 3D representation 2010pertain to a brake assembly including brake caliper and disc. The GUI may further show various types of graphic tools 130, 2070, 2080 for example for facilitating 3D orientation of the object, for triggering a simulation of an operation of an edited product or render various attributes of the displayed product 2010. A cursor 2060 may be controlled by a haptic device to allow the user to interact with the graphic tools.

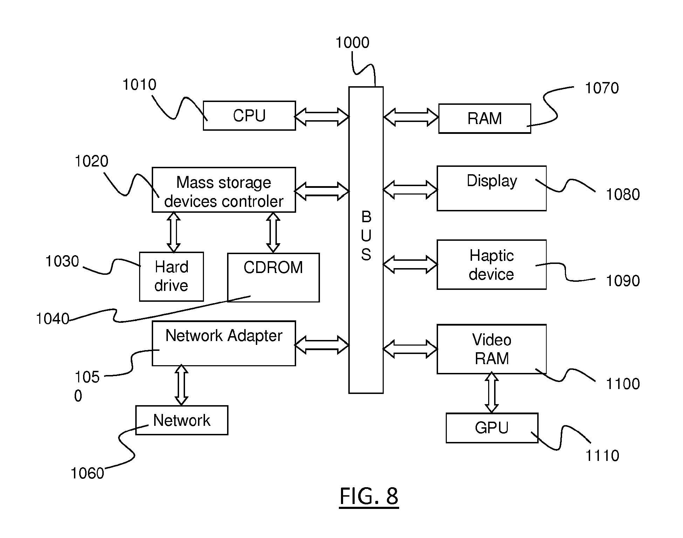

FIG. 8 shows a computer system, *e.g.* a workstation of a client. The client computer comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks; and CD-ROM disks 1040. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080, as mentioned with reference to FIG. 2. In addition, the cursor control device allows the user to select various commands, and input control signals. The cursor control device includes a number of signal generation devices for input control signals to system. Typically, a cursor control device may be a mouse, the button of the mouse being used to generate the signals.

It is to be understood that the computer system of FIG. 7 may be the server with which the client is connected to.

A computer program may comprise instructions by a computer, the instructions comprising means for causing the above system to perform the above method. The invention may for example be implemented in digital electronic circuitry, or in computer hardware, firmware, software, or in combinations of them. Apparatus of the invention may be implemented in a computer program product tangibly embodied in a machine-readable storage device for execution by a programmable processor; and method steps of the invention may be performed by a programmable processor executing a program of instructions to perform functions of the invention by operating on input data and generating output.

Referring back to FIG. 1, the steps S10 and S30 are related to the operations performed on/by a remote client in relation with a server, and the step S20 is related to the operations performed on/by the server. The relations between the client and the server follow the client-server model.

At step S10, a user interaction is performed on a remote client. User interaction means that the user performs an operation(s) on the client and that a feedback is returned to the user as a result of the operation(s). In practice, the user performs the interaction on a 3D modeled object represented in the GUI displayed on the client. The 3D modeled object may be for instance represented in a 3D scene represented in the GUI. The interaction may be performed as known in the art; for instance, but not limited to, by acting on the modeled object in the 3D scene with a cursor operated by a haptic device such as mouse, trackball, by acting via the touch sensitive screen of the client displaying the 3D modeled object, or by acting on the object via a tool, e.g. graphic tools 130, 2070, 2080 on FIG. 2.

The remote client may be any computer system, e.g. the computer system depicted on FIG. 8.

A 3D scene is a space in which spatial relationships between objects are described. The scene is comprised of at least two objects, and the objects may be, but not limited to, 3D modeled objects. A 3D scene is typically a model of a physical universe, which may be mathematically represented by a geometry which describes every point in 3D space by means of coordinates. The 3D scene may typically a real-world simulated wherein realistic interactions between the objects are simulated. The expression realistic interactions means that the simulated interactions reflect the interactions of the real-world, *e.g.* physical laws such that forces/efforts (gravity, magnetism, contact), control laws such that information flow, control events.

Then, at step S20, as a result of the user interaction performed on the remote client, the server several steps S200 to S260 are triggered.

At step S200, the server receives the interaction performed by the user on the remote client. Receiving the interaction means that information representing the interaction performed on the remote client has been correctly transmitted to the server.

Next, at step S210, a simulation of a 3D modeled object is performed by the server. The simulation is done in accordance with the received interaction. This amount to say that the server imitates the operation(s) obtained from the received interaction on a 3D modeled object. It is to be understood that the 3D modeled object on the client side is identical to the one on the server side. For instance, if the user performs a rotation on the 3D modeled object of the client, the simulation of the rotation is done by the server on the same 3D modeled object.

Then, at step S220, the result of the simulation is converted into at least one 2D image. The result of the simulation means a set of data produced by the simulation, *e.g.* the 3D modeled object has been rotated in the 3D scene. A conversion from 3D to 2D means that a remesh of the result of the simulation is performed and that the conversion is reversible, *e.g.* a 2D image obtained from a previous conversion can be reconverted into the original result of the simulation.

In practice, the 2D image may be a geometry image representation, also referred to as geometry image. A geometry image, as known in the art, is obtained from a transformation of an arbitrary surface of a 3D modeled object onto static mesh as a 2D image, which is a completely regular remesh of the original geometry of the 3D modeled object, and that support reverse transformation. The geometry image provides a completely regular structure that captures geometry as a simple 2D array of quantized points. Surface signals like normals and colors are stored in similar 2D arrays using the same implicit surface parametrization-texture coordinates are absent. Geometry image is discussed in Xianfeng Gu, Steven J. Gortler, and Hugues Hoppe. Geometry images. In Proceedings of the 29th annual conference on Computer graphics and interactive techniques, pages 355-361. ACM Press, 2002, which is hereby incorporated by reference.

For the sake of explanation, an example of a conversion of a 3D modeled object into geometry image is now discussed, in reference with FIGS. 3 and 4. In actual real-time 3D applications, a 3D modeled object is represented as a surface which is fully described by a set of connected polygons in space that form a polygonal meshes. A polygonal mesh can also be seen as a set of points (vertices) in space; these points are connected to some neighboring points by edges. Loops of edges describe faces/polygons of the mesh. FIG. 3 shows a 3D model represented as a surface of a polygonal mesh. This 3D model is transformed into a geometry image. At first, a polygonal mesh is converted into a regular mesh, where each face is a quadrangle and each vertex is connected to four others, except those at the grid borders. FIG. 4 shows the 3D model of FIG. 3 converted into such a regular mesh. Then the regular mesh is converted into a two-dimensional image: to each vertex on the mesh is associated a point in the image whose color elements (red/green/blue values) are set to be equal to the coordinates (x,y,z) of the position of the vertex in space. This image is referred as a geometry image. Image points are referred as pixels.

Interestingly, the conversion from a regular mesh to a geometry image is reversible. Indeed, vertex positions are stored into color information and the connection information (which vertices are connected by edges) is implicit: two adjacent points in the geometry image correspond to two connected vertices in the regular mesh. Thus, when reconstructing a 3D modeled object from a geometry image, only the regular mesh can be obtained, and not the original mesh. However, the reconstructed surface is close enough from the original surface, and the discrepancy between the reconstructed surface and the original surface may be quantified. This discrepancy mainly depends on the number of vertices of the original mesh. This number is selected large enough for obtaining close surfaces, but small enough because a large number of vertices of the original surface involves a large 2D image for storing their positions.

Next, at step S230, it is computed a difference between the current 2D image and a previous 2D image. Computing a difference between two 2D images means that a pixel subtraction operation takes two 2D images as input and produces as output a third 2D image whose pixel values are simply those of the first image minus the corresponding pixel values from the second image. The subtraction may comprise subtracting to each pixel color value (red/blue/green) its value in the previous 2D image, *e.g.* geometry image. That means if a vertex of the 3D modeled object has not move in space between the constructions of two 2D images, the associated color in the latest 2D image will be null. Depending on the simulation performed on the server the deformation of the three-dimensional object and thus the movement of its vertices are generally smooth and continuous, that means vertices positions in two consequent 2D image are strongly correlated and their difference is small; computing the difference between two consecutive 2D images will result in an image with smaller color values than in single 2D image.

It is to be understood that the current image and the previous image have preferably the same dimension and the same resolution.

The expression previous 2D image means a 2D image obtained earlier and according to the same interaction as the current 2D image. The expression current 2D image means the last 2D image obtained, that is, the most recent 2D image obtained.

The simulation of the 3D modeled object generally involves an animation on the 3D modeled object comprising a sequence of states of the 3D modeled object in the 3D scene, and the converted result of the simulation can be regarded as a sequence of geometry images, each geometry image being a converted state among the set of successive states. The states and the corresponding converted 2D images may be typically defined at regular intervals in time. For instance, the simulation of the rotation of a 3D modeled object involves an animation of the 3D modeled object. The rotation can be arbitrarily divided into a number of state of the 3D modeled object (e.g. a state for each 1ms), and for each state, the result of the simulation of the 3D modeled object is converted into one geometry image. In practice, the current 2D image and the previous 2D image are two successive 2D images obtained from the result of the simulation.

Computing the difference advantageously allows obtaining an image with smaller color values than in single 2D image, and therefore, the compression of this image will produce less data to send to the client, at step S260.

Then, at step S240, a compression is performed. Three cases may occur. In the first case (S232), the compression may be directly performed on the one or more 2D images obtained at step S220, while in the second case the compression is performed on the computed difference between two 2D images. Hence, the compression is repeatedly performed in the first case on the one or more 2D images without computing the difference between two 2D images.

In the third case, the compression is alternatively performed on the 2D image and on the computed difference between two 2D images. Said otherwise, the compression is performed alternatively with a compression without computing the difference. This allows avoiding the accumulation of error and therefore causing a reset of the error accumulated on each vertex. Indeed, when a 3D modeled object is reconstructed from the 2D images, the position of each vertex will be deducted by summing the difference. However each 2D image is built with an error due to the choice of a lossy compression scheme to compress the images. By summing the difference, the reconstructed object will also accumulate the errors of each 2D image.

Referring now to FIG. 6, it is shown an example of the streaming of frames transporting compressed 2D images (noted I for I-frames) or compressed difference between two 2D images (noted P for P-frames). The term frame is a formatted unit of data of an image to be sent, or sent, or received. A frame is thus equivalent a packet in a packet network.

Compressing an image means that a reduction of the data encoding the 2D image is performed. The compression reduces the size of the 2D image. The compression may tolerate loss. The server can adjust the compression ratio, which modifies the size of the compressed data, at the expense of image quality. It is to be understood that the compression ratio affects vertex positions of the 3D modeled object reconstructed from the uncompressed 2D image.

In practice, the compression involves three steps: (i) a transformation, (ii) a quantization and (iii) an encoding steps. This three steps compression scheme is similar as it can be do with known compression schemes such as standard image compression schemes like JPEG or JPEG 2000. First, the transformation separates the low frequency information from the high frequency information. For example it can be a discrete cosines transformation in the case as in JPG standard or a discrete wavelet transformation as in JPG 2000 standard. Then, the quantization step rounds the resulting coefficients. The adjustment of the quality of the image is done by the choice of the quantization step: a larger step will reduce the image quality but it will also reduce the variance of the data and makes them more correlated. Finally, the encoding step encodes these coefficients to binary data and achieves a reduction of the size of the data depending on how strongly correlated they are.

At step S250, a cumulated error due to the computing of the difference at step S240 is emulated. Emulating the cumulated error means that a simulation of the cumulated error is performed and that an evaluation of the cumulated error is done according to the simulation of the cumulated error. The emulation is typically performed by a dedicated function, *e.g.* a hardware or software module, as well known in the art.

As discussed in reference to step S240, the successive compressions of the differences computed between the current 2D image and a previous 2D image leads to an error accumulation on the client due to the choice of the image compression scheme. Since the compression is performed on the server, the server can predict the value of the cumulated error on the client using an emulation.

The prediction of the value of the cumulated error may be advantageously used by the server to send (step S260) a compressed image without computing the difference when the cumulated error exceeds a threshold value. This advantageously causes the cumulated error on the client to be reset when it exceeds the threshold.

At step S260, the compressed 2D image(s) are sent to the remote client. The transmission from the server to the remote client is performed as known in the art. In practice, several compressed images are sent; that is, the simulated 3D modeled object is streamed to the remote client.

The transmission of the compressed 2D images is typically performed using a telecommunication network such as the Internet. Any suitable communication protocol may be used for sending the compressed 2D images on the telecommunication network. For instance, the compressed 2D images may be transmitted on the Internet using IP protocol suite. User Datagram Protocol (UDP) is typically used for streaming the simulated 3D modeled object because UDP is a connectionless a simple message-based connectionless protocol.

It is to be understood that an application protocol designed for controlling streaming media servers is preferably used, *e.g.* Real Time Streaming Protocol (RTSP).

As discussed above in reference to step S240, three cases may occur when compressing. When the compression is directly performed on the one or more 2D images, compressed 2D images are sent to the remote client. The remote client thus receives the most complete information about the simulation performed on the 3D modeled object.

When the compression is carried out on the computed difference between two 2D images, only the difference between two 2D images is sent to the remote client. Interestingly, this allows limiting the consumption of bandwidth of the network connecting the server to the remote client. In addition, less computing resource are required by the remote client for the reconstruction (step S30) of the 3D modeled object.

When the compression is performed alternatively with a compression without computing the difference, a reset of the error accumulated on each vertex is done for each compressed 2D image received by the remote client. The decision to send a complete 2D image (that is, an image obtained at step 232 and not at step 230) may be decided based on two methods.

The first method relies on a periodic full update, wherein a complete compressed 2D image is sent to the remote client at regular intervals in time. The interval of time may be predetermined, *e.g.* each 1ms, or dynamically determined, *e.g.* according to the predicted value of the cumulated error. The compressed 2D image can also be sent to the remote client at regular number of frames, that is, every *n* frames. The number of frame *n* may be determined such that no complete 2D image is sent to the remote client while *E_{client}* ≤ *n*. *E_{frame}* wherein *E_{client}* is the maximal error accepted on the client and *E_{frame}* is the maximal error carried by one frame obtained by the difference between two 2D images. It is to be understood that both *E_{client}* is a predefined value, and that and *E_{frame}* is preferably measured using statistics related to the used compression scheme.

The second method relies on the error emulation obtained at step S250. As mentioned in reference to step S250, the result of the emulation of the cumulated error due to the computing of the difference may be advantageously used by the server to send a compressed image without computing the difference when the cumulated error exceeds a threshold value. The server predict errors due to compression, and a dedicated function on the server controls the type of frame to send to maintain the predicted client error under a fix threshold *E_{threshold}* which can be written *E_{client}* ≤ *E_{threshold}.* The function controlling whether a compressed 2D image or a compressed difference between two 2D images is to be sent, may be, but not limited to, *e.g.* a hardware or software module on the server, as well known in the art.

To now, operations performed by the server (step S20 on FIG. 1) have been described. In practice, the server performs these steps in real time, which means that the steps S200 to 260 are performed in a determined period, as known in the art. Referring now to FIG. 2, the step S30 performed by the remote client is now discussed.

The compressed one or more 2D images received by the remote client are processed for the purpose of displaying the result of the user interaction performed at step S 10.

At step S300, the remote client receives a compressed 2D image. This amounts to say the remote client receives a frame, as known in the art.

Then, at step S310, the compressed 2D image received by the remote client is uncompressed, as known in the art. Thus, the 2D image is restored to its original state after it has been compressed at step S240.

Next, at step S320, it is determined (or detected) whether the 2D image has been computed from a difference between the current 2D image and a previous 2D image. It is to be understood that the current 2D image is the last image received by the remote client. In the event the current image is the first image received by the remote client, the determination can be bypassed because the first image is necessary a 2D image not obtained from the difference between two 2D images, that is, the first image is a complete 2D image.

If it has been determined that the received compressed 2D image is not obtained from a difference, the 2D image is converted into a 3D modeled object, at step 350.

On the contrary, if it is determined at step S320 that the compressed at least one 2D image received by the remote client has been computed from the difference between the current 2D image and a previous 2D image, the conversion of the uncompressed 2D image into a 3D modeled object is performed according to steps S330 and S340. One understand that the conversion of a geometry image into a 3D model means that at least the regular mesh stored in the geometry image is obtained as a result of the conversion.

At step S330, a sum between the current decompressed 2D image and a previously decompressed 2D image is compute, and at step S340, the computed sum is then converted into a 3D modeled object, as known in the art.

Then, at step S360, the converted 2D object at step S340 or S350 is displayed on the remote client. The result of the simulation is therefore shown to the user, which amounts to say the result of the interaction is displayed.

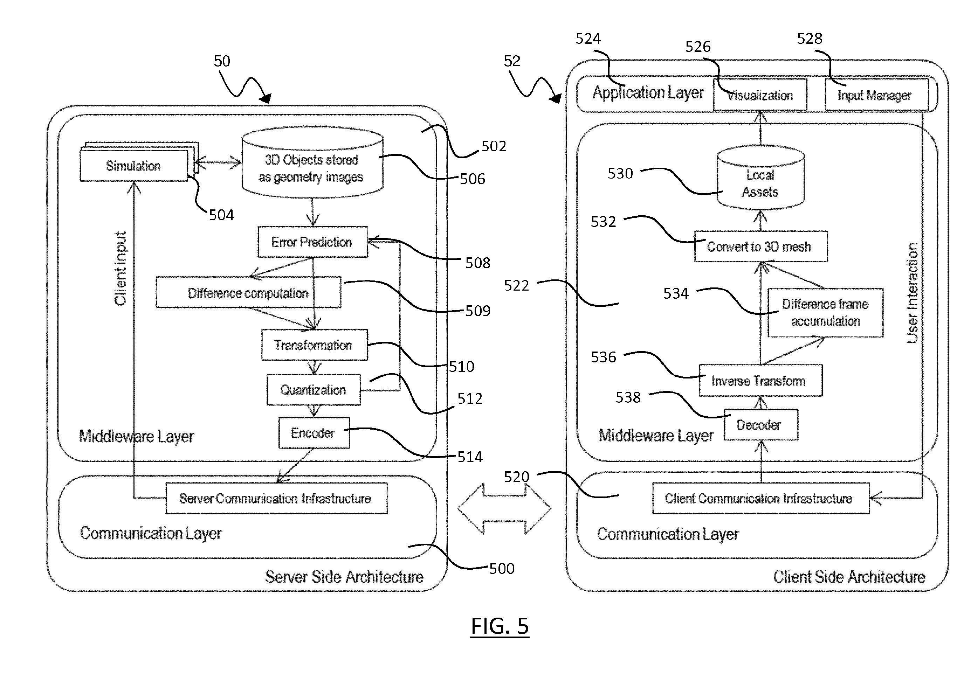

In reference to FIG. 5, an example of the architecture of a system carrying out the method according to the invention is shown. The system comprises a client 52 and a server 50. Both the client and the server may be a computer system as the one depicted on FIG. 8.

The server 50 comprises a communication layer 500 for communication with the communication layer 520 of the remote client 52. The communication layers 500 and 522 may be similar to the layers 1, 2 and 3 of the OSI model. In practice, the communication layer may be implemented as a module, *e.g.* a DLL, which manages the communications. It is to be understood that the communication layer may also be adapted for managing the communication protocol that is used for sending the compressed 2D images on the telecommunication network.

The communication layer 500 of the server is adapted to receive the interaction of step S200.

The client further comprises an application layer 524 on the Middleware layer. The application layer may comprise a display visualization module 526 adapted for displaying a graphical user interface on a display of the client. The application layer may further comprise an input manager 528 adapted to manage user interaction detected on the graphical user interface. The interaction is generated by a haptic device on the graphical user interface.

The server further comprises a middleware layer 502, which provides services to software applications and enables the various components of a distributed system to communicate and manage data. Similarly, the client also comprises a middleware layer 522. One understands that both the middleware layers 502 and 522 are able to communicate and manage 3D modeled objects together.

The middleware 502 of the server comprises a simulation module 504 adapted to perform a simulation on a 3D modeled object perform a simulation on a 3D modeled object according to an interaction (step S210). The interaction may be a user interaction managed by the input manager of the client. The simulation module may be further adapted to convert the result of the simulation into at least one 2D image (step S220).

The middleware 502 of the server may further comprise a database 506 for storing the 2D images and the images obtained from the difference between two 2D image.

The middleware 502 of the server may further comprise a difference computation module adapted to compute the 2D images and the difference between two 2D images (step S230).

The middleware 502 of the server may also comprise an error prediction module 508 adapted to perform the step S250.

The middleware 502 of the server may also comprise a transformation module 510, a quantization module 512, and an encoder 514 for compressing the 2D images at step S240.

The middleware 522 of the client may comprise a decoder module 538 and an inverse transform module 536 adapted to perform the step S310. The inverse transform module 536 is further adapted to perform the determination of step S320.

The middleware 522 of the client may further comprise a difference frame accumulation module 534 for storing the frames being detected as comprising a difference between two 2D images (step S320). The difference frame accumulation module is also adapted to compute a sum between two uncompressed 2D images (step S330).

The middleware 522 of the client may also comprise conversion module 532 adapted for converting a 2D image into a 3D modeled object (steps S340 and S350).

The middleware 522 of the client may also comprise a local assets database 530 adapted for storing data regarding the 3D scene wherein the simulated 3D modeled object evolves. Indeed, the server solely sends to the client results of the simulation, and objects that are not concerned by the simulation performed according to the interaction do not have to be send to the client as they are unchanged, that is, not involved in the simulation. Hence, the needs of bandwidth are highly decreased.

The implementation of the modules described in FIG. 5 may rely on a dedicated hardware or on software. In practice, the modules are pieces of software executed by a computer system, such the one depicted on FIG. 8.

The invention may advantageously be implemented in one or more computer programs that are executable on a programmable system including at least one programmable processor coupled to receive data and instructions from, and to transmit data and instructions to, a data storage system, at least one input device, and at least one output device. The application program may be implemented in a high-level procedural or object-oriented programming language, or in assembly or machine language if desired; and in any case, the language may be a compiled or interpreted language.

## Claims

1. A computer-implemented method for streaming a simulated three-dimensional modeled object from a server to a remote client, comprising the steps of:
a) receiving (S10) on a server an interaction performed by a user on a remote client;
b) performing (S20) on the server the steps of:
- simulating (S210) a three-dimensional modeled object based on the interaction;
- converting (S220) the result of the simulation into at least one two-dimensional image;
- compressing (S240) the said at least one two-dimensional image; and
- sending (S260) to the remote client the compressed at least one two-dimensional image.

2. The computer-implemented method of claim 1, wherein the step of compressing the said at least one two-dimensional image comprises:
- computing a difference (S230) between the current two-dimensional image and a previous two-dimensional image;
- compressing (S240) the computed difference.

3. The computer-implemented method of claim 2, wherein the step of compressing is repeatedly performed with a compression without computing the difference.

4. The computer-implemented method of any of claims 2 or 3, wherein the current and previous two-dimensional images are two successive two-dimensional images obtained from the result of the simulation.

5. The computer-implemented method of any of claims 2 to 4, further comprising a step of emulating a cumulated error due to the computing of the difference at the compressing step.

6. The computer-implemented method of any of claims 1 to 5, wherein the said at least one two-dimensional image is a geometry image.

7. The computer-implemented method of any of claims 1 to 6, wherein the interaction performed at the receiving step a) is performed on a three-dimensional modeled object displayed on the remote client.

8. The computer-implemented method of any of claims 1 to 7, wherein the step of b) performing is carried out in real time by the server.

9. The computer-implemented method of any of claims 1 to 8, further comprising:
c) performing on the remote client (S30) the steps of:
- receiving (S300) the compressed at least one two-dimensional image sent by the server;
- decompressing (S310) the compressed at least one two-dimensional image;
- converting the at least one two-dimensional image into a three-dimensional modeled object; and
- displaying (S360) the converted two-dimensional object.

10. The computer-implemented method of claims 9, wherein the step of decompressing the compressed at least one two-dimensional image comprises:
- determining (S320) that the compressed at least one two-dimensional image received by the remote client has been computed from the difference between the current two-dimensional image and a previous two-dimensional image;
and wherein the step of converting the at least one two-dimensional image into a three-dimensional modeled object comprises:
- computing (S330) a sum between a current decompressed at least one two-dimensional image and a previous decompressed two-dimensional image;
- converting (S340) the computed sum into a three-dimensional modeled object.

11. A computer program having computer-executable program code instructions stored therein, the computer-executable program code instructions comprising program code instructions for performing the method of any of claims 1 to 10.

12. A computer readable storage medium having recorded thereon a computer program according to claim 11.

13. A system for streaming a simulated three-dimensional modeled object from a server to a remote client, comprising:
i) a server (50) comprising a module for performing the method of any of claim 1 to 8;
ii) a client (52) comprising:
- a graphical user interface for displaying a three-dimensional modeled object;
- a haptic device for generating an interaction performed by a user on the graphical user interface;
- a module for performing the step c) of claim 9 or 10.

14. The system of claim 13, further comprising
iii) a communication network connecting the server to the client.
